# EUROPEAN PATENT APPLICATION

(11) **EP 2 330 004 A2**
(43) Date of publication of application: **08.06.2011**
(21) Application number: 10159720.1
(22) Date of filing: 13.04.2010
(51) Int. Cl.: B60T 8/17, B60T 8/32

(54) **Wheel slip protection system**

(30) Priority: 13.11.2009 US 618285
(71) Applicant: Ellcon National, Inc., Greenville, SC 29604-9377 (US)
(72) Inventor: Head, Thomas, Greenville, SC 29615 (US)
(74) Representative: Gray, James

(57) **Abstract**

An anti-locking brake module comprises a housing having a first port coupled to a brake pipe (10), a second output port coupled to a brake cylinder (24), and a third port coupled to atmosphere. A blocking valve (72) is in fluid communication with the first port and a vent valve (74) is in fluid communication with the blocking valve (72), the second port and the third port. At least one sensor (64a-d) is coupled to an axle (66a-d) on the railcar. A microprocessor (48) coupled to the blocking valve (72), the vent valve (74) and the at least one sensor (64a-d) is configured to calculate one of a wheel speed of the railcar axle (66a-d) and a deceleration rate of the railcar axle (66a-d) based on signals received from the at least one sensor (64a-d), and compare the calculated one of the wheel speed of the railcar axle (66a-d) and the deceleration rate of the railcar axle (66a-d) with a reference value. In response to the comparison, the blocking valve (72) and the vent valve (74) are activated to vent brake cylinder air pressure out of the third port. A power supply is operatively coupled to the microprocessor (48).

## Description

### FIELD OF THE INVENTION

The present invention relates generally to railcar brake systems. More particularly, the present invention relates to an automated wheel slip protection system for use with railcar pneumatic brake systems.

### BACKGROUND

Wheel damage contributes a great deal to maintenance costs associated with railway freight cars. Unreleased handbrakes contribute to most damage on freight car wheels. That is, if the handbrake is left in the applied position and an engine then pulls the railway car, the wheel will not rotate thereby causing flat spots to form on the area of the wheel in contact with the rail. However, another source of wheel damage is the over application of the brake system, which can occur due to the varying conditions of the railway track, for example wet or icy tracks. Over-applied brake systems may cause the wheels to lock up and slip along the tracks leading to wheel flat spots.

Anti-skid devices are known for railway vehicles and are intended to prevent the wheels from locking during braking, and to achieve optimum use of the frictional engagement between the wheel and rail. Typically, a microprocessor in the anti-skid device calculates the actual vehicle speed or train speed.

One problem with prior anti-slip monitoring devices is that they are highly complex and are costly to implement. This is because installing such systems requires additional structure, sensors, cabling and installation space.

### SUMMARY OF THE INVENTION

The present invention recognizes and addresses disadvantages of prior art constructions and methods, and it is an object of the present invention to provide an improved wheel slip monitoring system. This and other objects may be achieved by an anti-locking brake module for use with a pneumatic railcar brake system comprising a housing having a first port operatively coupled to a brake pipe, a second output port operatively coupled to a brake cylinder, and a third port operatively coupled to atmosphere. A blocking valve in the housing is in fluid communication with the first port. A vent valve in the housing is in fluid communication with the blocking valve, the second port and the third port. At least one sensor is operatively coupled to an axle on the railcar. A microprocessor is operatively coupled to the blocking valve, the vent valve and the at least one sensor. The microprocessor is configured to calculate one of a wheel speed of the railcar axle and a deceleration rate of the railcar axle based on signals received from the at least one sensor, and compare the calculated one of the wheel speed of the railcar axle and the deceleration rate of the railcar axle with a reference value. In response to the comparison, the blocking valve and the vent valve are activated to vent brake cylinder air pressure out of the third port. A power supply is operatively coupled to the microprocessor.

In one embodiment, the blocking valve further comprises a blocking valve spool moveably received in the blocking valve, the blocking valve spool being moveable between a first position in which air pressure flows through the blocking valve, and a second position in which air pressure is blocked from flowing through the blocking valve. In these embodiments, the vent valve further comprises a vent valve spool moveably received in the vent valve, the vent valve spool being moveable between a first position in which air pressure flows through the vent valve out of the second port into the brake cylinder, and a second position in which air pressure flows from the brake cylinder out of the third port.

In yet other embodiments, a plurality of sensors are each operatively coupled to a respective railcar axle, wherein each of the plurality of sensors are operatively coupled to the microprocessor. In these embodiments, the microprocessor receives a signal from one of the plurality of sensors and calculates a speed of the respective axle, receives a signal from another one of the plurality of sensors and calculates a speed of the respective axle, and uses one of the calculated speed values as the reference value.

In other embodiments, the module further comprises a first solenoid valve operatively coupled to the microprocessor and the blocking valve, the first solenoid valve being responsive to commands from the microprocessor to move the blocking valve spool from the first position into the second position. In these embodiments, a second solenoid valve is operatively coupled to the microprocessor and the vent valve, the second solenoid valve being responsive to commands from the microprocessor to move the vent valve spool from the first position into the second position.

In yet other embodiments, the plurality of sensors are encoders. In other embodiments, the plurality of sensors are alternators, and an output signal from each of the plurality of sensors is an AC current. In these embodiments, each of the plurality of alternator output signals is used by the microprocessor to calculate a respective wheel axle speed, and recharge the power supply.

In some embodiments, the anti-lock braking module further comprises at least one of a wireless receiver, a wireless transmitter and a wireless transceiver so that each anti-locking brake module can communicate with another anti-locking brake module.

In another preferred embodiment, an anti-locking brake module for use with a pneumatic railcar brake system comprises a housing having a first port operatively coupled to a brake pipe, a second output port operatively coupled to a brake cylinder, and a third port operatively coupled to atmosphere. A vent valve in the housing is in fluid communication with the first port, the second port and the third port. At least one sensor is operatively coupled to an axle on the railcar. A microprocessor is operatively coupled to the vent valve and the at least one sensor. The microprocessor is configured to calculate one of a wheel speed of the railcar axle and a deceleration rate of the railcar axle based on signals received from the at least one sensor, and compare the calculated one of the wheel speed of the railcar axle and the deceleration rate of the railcar axle with a reference value, and in response, activate the vent valve to vent brake cylinder air pressure out of the third port.

In some embodiments, a plurality of sensors are operatively coupled to a respective railcar axle, wherein each of the plurality of sensors are operatively coupled to the microprocessor. In other embodiments, a rechargeable power supply is coupled to the microprocessor.

In yet other embodiments, the microprocessor receives a signal from one of the plurality of sensors and calculates a speed of the respective axle. In these embodiments, the microprocessor receives a signal from another one of the plurality of sensors and calculates a speed of the respective axle. The microprocessor uses one of the calculated wheel speed values as the reference value and compares the other calculated wheel speed value to the reference value.

In some embodiments, the plurality of sensors are encoders. In other embodiments, the plurality of sensors are alternators, and an output signal from each of the plurality of sensors is an AC current. In these embodiments, each of the plurality of alternator output signals is used by the microprocessor to recharge the power supply.

In other embodiments, the anti-lock braking module has at least one of a wireless receiver, a wireless transmitter and a wireless transceiver so that each anti-locking brake module can communicate with another anti-locking brake module.

In yet another preferred embodiment, an anti-locking brake system for use with a railcar comprises a brake control valve having a first port coupled to a brake pipe, a second port coupled to an auxiliary reservoir, a third port coupled to an emergency reservoir, and a fourth port. A first anti-locking brake module has a first housing having a first housing first port operatively coupled to the brake control valve fourth port, a first housing second output port operatively coupled to a first brake cylinder, and a first housing third port operatively coupled to atmosphere. A first vent valve in the first housing is in fluid communication with the first housing first port, the first housing second port and the first housing third port. A first at least one sensor is operatively coupled to an axle on a first railcar truck. A first microprocessor is operatively coupled to the first vent valve and the first at least one sensor. The first microprocessor is configured to calculate one of a wheel speed of the first railcar truck axle and a deceleration rate of the first railcar truck axle based on signals received from the first at least one sensor. A second anti-locking brake module has a second housing having a second housing first port operatively coupled to the brake control valve fourth port, a second housing second output port operatively coupled to a second brake cylinder, and a second housing third port operatively coupled to atmosphere. A second vent valve in the second housing is in fluid communication with the second housing first port, the second housing second port and the second housing third port. A second at least one sensor is operatively coupled to an axle on a second railcar truck. A second microprocessor is operatively coupled to the second vent valve and the second at least one sensor. The second microprocessor is configured to calculate one of a wheel speed of the second railcar truck axle and a deceleration rate of the second railcar truck axle based on signals received from the second at least one sensor. The first and the second microprocessors communicate with each other to compare the calculated one of a wheel speed of the first railcar truck axle and a deceleration rate of the first railcar truck axle to the calculated one of a wheel speed of the second railcar truck axle and a deceleration rate of the second railcar truck axle. In response to the comparison, the first and the second microprocessors activate one of the first vent valve and the second vent valve to vent brake cylinder air pressure from one of the first brake cylinder and the second brake cylinder.

In some embodiments, the first and the second anti-locking brake modules communicate with one another over a wireless communication channel.

In a preferred method for preventing wheels on a railcar from slipping on a track, the method comprises providing an anti-locking brake module having a housing defining a first port operatively coupled to a brake pipe, a second output port operatively coupled to a brake cylinder, and a third port operatively coupled to atmosphere, a valve in the housing in fluid communication with the first port, the second port and the third port, a sensor operatively coupled to an axle on the railcar, a microprocessor operatively coupled to the valve and the at least one sensor. The method further comprises the steps of calculating one of a wheel speed of the railcar axle and a deceleration rate of the railcar axle based on signals received from the sensor, comparing the calculated one of the wheel speed of the railcar axle and the deceleration rate of the railcar axle to a reference value, and activating the valve when the one of the wheel speed of the railcar axle and the deceleration rate is less than the reference value to vent brake cylinder air pressure from the brake cylinder out of the third port to atmosphere.

In some embodiments, the method further comprises the step of charging a rechargeable power supply operatively coupled to the microprocessor with signals received from the sensor. In other embodiments, the sensor is an alternator. In yet other embodiments, the method further comprises the step of communicating the one of the wheel speed of the railcar axle and the deceleration rate of the railcar axle with other anti-locking braking modules. In some of these embodiments, the step of communicating occurs over a wireless communication channel.

Various combinations and sub-combinations of the disclosed elements, as well as methods of utilizing same, which are discussed in detail below, provide other objects, features and aspects of the present invention.

### BRIEF DESCRIPTION OF THE DRAWINGS

A full and enabling disclosure of the present invention, including the best mode thereof, to one of ordinary skill in the art, is set forth more particularly in the remainder of the specification, including reference to the accompanying drawings, in which:
Figure 1 is a schematic view of a braking system for a railcar having an anti-locking brake module of the present invention; and
Figure 2 is a detailed schematic view of the anti-locking brake module of Figure 1.

Repeat use of reference characters in the present specification and drawings is intended to represent same or analogous features or elements of the invention according to the disclosure.

### DETAILED DESCRIPTION OF THE PREFERRED EMBODIMENT

Reference will now be made in detail to presently preferred embodiments of the invention, one or more examples of which are illustrated in the accompanying drawings. Each example is provided by way of explanation, not limitation, of the invention. It is to be understood by one of ordinary skill in the art that the present discussion is a description of exemplary embodiments only, and is not intended as limiting the broader aspects of the present invention, which broader aspects are embodied in the exemplary constructions. In fact, it will be apparent to those skilled in the art that modifications and variations can be made in the present invention without departing from the scope and spirit thereof. For instance, features illustrated or described as part of one embodiment may be used on another embodiment to yield a still further embodiment. Thus, it is intended that the present invention covers such modifications and variations as come within the scope of the appended claims and their equivalents.

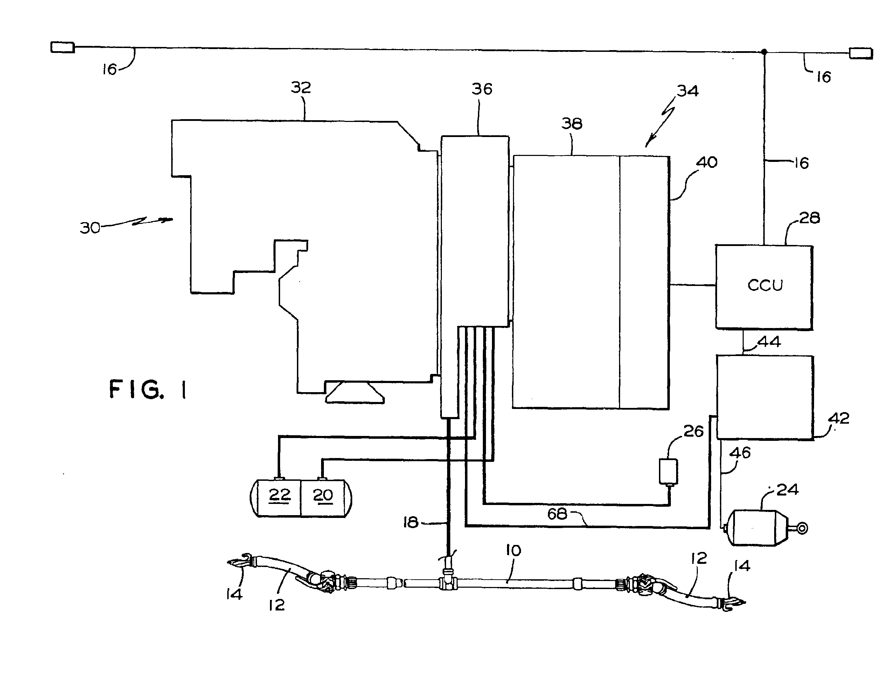

Referring to FIG. 1, an electronic control pneumatic braking (ECP) system is shown having a brake pipe 10 with a flexible hose 12 and coupling 14 at each end. An ECP brake control system in a locomotive (not shown) includes a cab station unit (not shown) and a master controller (not shown) from which the brakes on the train are controlled. The cab station unit features one or two handle(s) and/or push buttons that the train operator uses to control the brakes. The automatic brake handle can be moved between several positions: release, minimum service, full service, suppression, continuous service, and emergency. Between the minimum and full service positions lies the service zone where each incremental movement of the handle toward the full service position causes an even stronger service application of the brakes. The force with which the brakes apply depends on how far towards the full service position the brake handle is moved.

Inputs from the handle(s) and/or push buttons are processed by the cab station unit (not shown) and passed to a master controller (not shown). The master controller is programmed to respond to inputs from the handles and other sources to formulate a brake command appropriate to current conditions and transmit a signal to each railcar in the freight train. Brake commands are conveyed to the ECP brake equipment on each railcar via wiring 16. Similarly, in a manner known in the railroad industry, brake pipe 10 connects to the ECP brake equipment on each railcar via a branch pipe 18. The master controller (not shown) can, through a brake command, order any action from a release of brakes to an emergency application of brakes or any degree of brake application therebetween.

The ECP brake equipment on each railcar typically includes an auxiliary reservoir 20, an emergency reservoir 22, one or more brake cylinders 24, a retainer valve 26, a car control unit (CCU) 28 and an ECP brake control valve 30. ECP brake control valve 30 has a pneumatic portion 32 and an electropneumatic portion 34, typically mounted to opposite sides of a pipe bracket 36. Pneumatic portion 32 may be an emergency portion of a brake control valve. Electropneumatic portion 34 is comprised of a manifold 38 and several pressure transducers and several solenoid-operated application and release valves, collectively numbered 40. Manifold 38 defines several ports to which transducers and solenoid valves 40 connect.

Each port of pipe bracket 36 connects to one of brake pipe 10, retainer valve 26, auxiliary reservoir 20, emergency reservoir 22 and brake cylinder 24. The pressure transducers produce signals, indicative of air pressure in brake pipe 10, the pressure in auxiliary and emergency reservoirs 20 and 22, and the pressure in brake cylinder 24 and transmit these values for use by CCU 28.

Each CCU 28 includes a transceiver and a microprocessor, and is configured to receive brake commands issued by the master controller (not shown). The transceiver converts electrical brake commands into a form usable, by the microprocessor, which is then used to control the application and release valves. Solenoid valves 40 allow for air to be maintained within, exhausted from, or directed from either or both of reservoirs 20 and 22 to brake cylinder 30.

An anti-locking braking module 42 is operatively coupled to brake pipe 10 via a feed line 68, to CCU 28 by a line 44 and to brake cylinder 28 by a feed line 46. Anti-locking brake module 42 monitors the rotation of the wheel axles on the railcar and becomes activated if it senses one axle slowing down faster than the others on the railcar. Anti-locking brake module 42 limits wheel slipping by closing off an input to brake cylinder 24 and allowing air from the brake cylinder to vent to atmosphere until the wheel axles all rotate at the same speed.

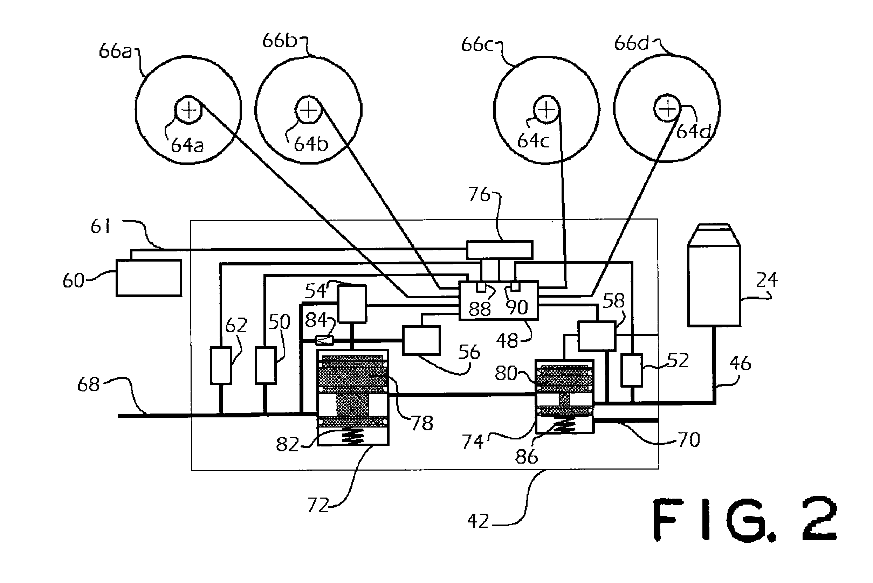

Referring to FIG. 2, anti-locking brake module 42 comprises a microprocessor based circuit 48, two pressure sensors 50 and 52, three solenoid pilot valves 54, 56 and 58, a power supply 60, a pressure switch 62 and speed sensors 64a, 64b, 64c and 64d coupled to each wheel axle 66a, 66b, 66c and 66d of the railcar. A block valve 72 is positioned in line with pressure line 68, which couples to a port on brake pipe 36. A vent valve 74 is positioned intermediate block valve 72 and brake cylinder 24. Vent valve 74 vents air to atmosphere by a vent line 70.

Solenoid pilot valves 54, 56 and 58 are configured to move spool 78, in block valve 72, and spool 80, in vent valve 74, to control the airflow to brake cylinder 24. Pilot valve 54 moves spool 78 so that the air flow in line 68 is blocked from passing through to brake cylinder 24. Pilot valve solenoid 54 only turns on long enough to move spool 78 against an upward bias of a spring 82. When pilot valve 54 closes, air trapped above the spool keeps spool 78 in its downward position. A second pilot valve 56, controlled by microprocessor 48, is configured to release air so spring 82 can bias spool 78 back up into its normal operating position, thereby allowing air to once again flow from line 68 to brake cylinder 24. A check valve 84 allows air to be released when pressure in line 68 is released, which releases the pressure in brake cylinder 24 after the railcar is stopped and the brakes are released.

A third pilot valve 58 controls vent valve second spool 74 so that air from brake cylinder 24 can be vented to atmosphere. Pilot valve 58 is a three-way type valve configured to bias vent spool 80 downward against an upward bias of a spring 86 to vent air out from the brake cylinder through vent line 70. When pilot valve 58 is turned off, air from above vent spool 80 is released from vent valve 74, and vent spool 80 is biased upward by vent spring 86, thereby reconnecting the pressure line to brake cylinder feed line 46. Because pilot valves 54, 56 and 58 are operated for short periods of time, usually less than one second, overall power consumption is low.

Microprocessor 48 is configured to monitor pressure sensors 50, on air line 68, and sensor 52 on brake cylinder feed line 46, and uses readings from pressure sensor 52 to limit how much air is released from brake cylinder 24. Pressure sensors 50 and 52 each have a ratiometric output. That is, they use a 5Vdc input voltage and provide an output in a range of 0.5V to 4.5V depending on the measured pressure. Two analog-to-digital converter inputs 88 and 90 on microprocessor 48 read sensor output signals and convert them to digital inputs. Each sensor requires about 3.5 mA from power supply 60 to operate, which is provided through microprocessor 48 over line 61.

When anti-locking brake module 42 is used on an ECP equipped railcar, wheel speed sensors 64a, 64b, 64c and 64d may be small encoders. Wheel speed sensors 64a, 64b, 64c and 64d are mounted on an end of each axle 66a, 66b, 66c and 66d and are configured to detect the rotational speed of its respective wheel axle. The wheel speed sensors need to tolerate a high vibration and shock environment, for example, vibration levels of +- 30 G's continuous and shock levels of +- 100 G's. As such, in one preferred embodiment, wheel speed sensors 64a, 64b, 64c and 64d are encoders manufactured by Ellcon National, of Greenville, South Carolina. However, it should be understood that other types of ruggedized sensors may be used.

To conserve power, anti-locking braking module 42 is turned off whenever the railcar brakes are released. Anti-locking braking module 42 is configured to turn on whenever air pressure in line 68 increases above a predetermined pressure, in one preferred embodiment, 10 PSI, thereby closing pressure switch 62. The anti-braking module is configured to turn off when air pressure in line 68 decreases below a predetermined pressure, in one preferred embodiment, 3 PSI. Moreover, to save power, anti-locking braking module 42 can also be configured to turn off after the railcar comes to a full stop.

Because of the low power needed to operate anti-locking braking module 42, the system may be used on non-ECP equipped railcars having conventional pneumatic brake systems. In the case of purely pneumatic railway cars with no ECP system, wheel speed sensors 64a, 64b, 64c and 64d are small alternators mounted on each wheel axle 66a, 66b, 66c and 66d, since the output of the alternators can be used to charge a rechargeable power source. Thus, in these embodiments, power supply 60 would be rechargeable and may consist of a battery, an ultra-capacitor pack or other suitable rechargeable power sources. In one preferred embodiment, wheel speed alternators 64a, 64b, 64c and 64d are manufactured by Ellcon National, of Greenville, South Carolina.

Each alternator 64a, 64b, 64c and 64d provides a pulsed AC voltage output for use in sensing speed and transmits the signal over lines or other communication channels to microprocessor 48. A frequency of the AC voltage varies with wheel speed and increases in frequency as wheel speed increases. If an impedance of alternators 64a, 64b, 64c and 64d is chosen to be high enough, the voltage level produced can be controlled by the impedance load on each alternator. Because each alternator 64a, 64b, 64c and 64d can produce less current at low speeds, it is easier to limit high speed voltage output.

The output signal from alternators 64a, 64b, 64c and 64d, in addition to providing wheel speed, is used to charge rechargeable power supply 60. That is, the output signal of alternators 64a, 64b, 64c and 64d provides sufficient current when the railcar is traveling to keep rechargeable power supply 60 charged. Moreover, because power is only used when the train brakes are applied and the train is moving, power usage is low. To limit the necessary power usage, anti-locking braking module 42 would turn off when the railcar brakes are fully released or air pressure in supply line 68 falls below a predetermined pressure level, and would once again turn on the next time the railcar brakes are applied.

When one or more modules are used on a single car, alternators 64a, and 64b would be hardwired to one anti-locking braking module 42, and alternators 64c and 64d would be hardwired to another one of anti-locking braking module 42. Because the information from one anti-locking braking module 42 must be used in conjunction with information obtained by another anti-locking braking module 42, a communication link must exist between anti-locking braking modules on a single car. Thus, in one embodiment, the plurality of anti-locking braking modules must be hard wired together on a single railway car so that the data from all wheel axles on a single car may be compared to detect wheel slippage. In other embodiments, the need for hardwiring between modules may be eliminated by equipping each with a wireless receiver and transmitter, or in the alternative a wireless transceiver. In this way, each module can communicate with another module.

In some embodiments, anti-locking braking modules from different railcars may be configured to communicate with one another to allow wheel speed data from different cars to be compared. In this way, if the wheels on one car are all rotating at the same speed while slipping, the wheel slip can be detected by making a comparison of one car's wheel speed with the wheel speed on an adjacent car.

In operation, anti-locking braking module 42 monitors the rotation of railcar wheel axles 64a, 64b, 64c and 64d, and activates if the module senses one axle slowing down at a faster rate than the other axles. Anti-locking braking module 42 may be configured in one of two ways for detecting wheel slippage. The first compares the revolutions per minute (RPM) of each axle to the others on the railcar. When one axle begins to slow down relative to the others, slippage is indicated. Under the second method, anti-locking braking module 42 calculates the deceleration rate of all axles and compares them to the calculated maximum deceleration rate possible. If the deceleration rate of any one axle is faster than the calculated maximum rate, slippage is detected. Anti-locking braking module 42 also uses the wheel speed sensors to determine when the train has stopped. A delay of a few seconds after stopping would ensure the train is stopped before turning the system off. The microprocessor in anti-locking braking module 42 would be configured to turn the power supply off.

Once active, anti-locking braking module 42 limits wheel slippage by bleeding air pressure from brake cylinder 24. In response to a detected wheel slip, module 42 directs moving blocking valve spool 78 downward against the upward bias of blocking valve spring 82, thereby closing off air pressure supplied on feed line 68 to brake cylinder 24. Next, vent valve spool 80 is moved downward against the upward bias of vent valve spring 86, thereby allowing air from brake cylinder 24 to vent to atmosphere via vent line 70. Pressure sensor 50, on input line 68, and pressure sensor 52 on brake cylinder line 46 are used to limit how much air is vented out from the brake cylinder. The pressure sensors are also used to equalize the pressure in line 68 and brake cylinder 24 when the railcar brakes are released.

Anti-locking braking module 42 is also configured to compare the pressure in feed line 68 to that of brake cylinder 24 to account for varying track conditions. If the pressure in feed line 68 is higher than that in brake cylinder 24, air from feed line 68 may be added to brake cylinder 24. As the air pressure in brake cylinder 24 is increased, wheel axle speed is monitored to determine if the wheels begin to slip on the tracks. If the rate of speed of one of the wheel axles begins to slow at a faster rate than the others, air is again vented from brake cylinder 24 to atmosphere by moving vent spool 80 downward against the upward bias of vent spring 86. If, in the alternative, no wheel slip is detected, the system could continue to add more air pressure into brake cylinder 24 and repeat the monitoring. This cycle can be repeated until wheel slip is detected.

On a railcar equipped with an ECP system, CCU 28 monitors the pressure in feed line 68 and would increase air pressure in the feed line when air pressure drops. On a railcar without an ECP system, the pneumatic control valve matches the pressure in the auxiliary reservoir to the pressure in brake pipe 10 by sending air to brake cylinder 24. Thus, when anti-locking braking module 42 moves blocking spool 78 downward to block the air flow from feed line 68, the pneumatic control valve stays open allowing air to be taken from feed line 68 if needed to maintain sufficient air pressure to reapply the brakes. That is, if wheel slip is detected, the brake pressure is sufficiently reduced to allow the wheel to rotate. Once the wheel is rotated, the brake pressure is increased to determine if the wheel begins to slip again. If the slip reoccurs, then brake pressure is reduced. This allows the system to determine if an actual wheel slip occurred or if the wheel hit an ice patch or grease.

For safety purposes, anti-locking braking module 42 would be configured to have all valves in a position that connects feed line 68 to brake cylinder 24 should the system fail. Thus, in the case of a system failure, Anti-locking braking module 42 is bypassed and the braking system would be fully functional.

While one or more preferred embodiments of the invention have been described above, it should be understood that any and all equivalent realizations of the present invention are included within the scope and spirit thereof. The embodiments depicted are presented by way of example and are not intended as limitations upon the present invention. Thus, those of ordinary skill in this art should understand that the present invention is not limited to these embodiments since modifications can be made. Therefore, it is contemplated that any and all such embodiments are included in the present invention as may fall within the scope and spirit thereof.

## Claims

1. An anti-locking brake module for use with a pneumatic railcar brake system comprising:
a. a housing having
i. a first port operatively coupled to a brake pipe,
ii. a second output port operatively coupled to a brake cylinder, and
iii. a third port operatively coupled to atmosphere;
b. a vent valve in said housing, said vent valve being in fluid communication with said first port, said second port and said third port;
c. at least one sensor operatively coupled to an axle on the railcar; and
d. a microprocessor operatively coupled to said vent valve and said at least one sensor;
wherein said microprocessor is configured to
calculate one of a wheel speed of the railcar axle and a deceleration rate of the railcar axle based on signals received from said at least one sensor, and
compare the calculated one of said wheel speed of the railcar axle and said deceleration rate of the railcar axle with a reference value, and in response, activate said vent valve to vent brake cylinder air pressure out said third port.

2. The anti-locking brake module of claim 1, further comprising a plurality of sensors, each sensor being operatively coupled to a respective railcar axle, wherein each of said plurality of sensors are operatively coupled to said microprocessor.

3. The anti-locking brake module of claim 1 or claim 2, further comprising a rechargeable power supply.

4. The anti-locking brake module of claim 2 or claim 3 when dependent upon claim 2,
wherein
a. said microprocessor receives a signal from one of said plurality of sensors and calculates a speed of the respective axle;
b. said microprocessor receives a signal from another one of said plurality of sensors and calculates a speed of the respective axle, and
c. said microprocessor uses one of said calculated speeds as said reference value and compares the other calculated wheel speed value to said reference value.

5. The anti-locking brake module of claim 2, wherein said plurality of sensors are encoders.

6. The anti-locking brake module of claim 2, wherein said plurality of sensors are alternators, and an output signal from each of said plurality of sensors is an AC current.

7. The anti-locking brake module of claim 6, wherein each of said plurality of alternators output signals is used by said microprocessor to recharge said power supply.

8. The anti-locking brake module of any preceding claim, further comprising at least one of a wireless receiver, a wireless transmitter and a wireless transceiver so that each anti-locking brake module can communicate with another anti-locking brake module.

9. The anti-locking brake module of claim 1, module further comprising:
a blocking valve in said housing, said blocking valve being in fluid communication with said first port; and a power supply operatively coupled to said microprocessor, wherein said microprocessor is configured to compare the calculated one of said wheel speed of the railcar axle and said deceleration rate of the railcar axle with a reference value, and in response, activate said blocking valve and said vent valve to vent brake cylinder air pressure out said third port.

10. The anti-locking brake module of claim 9, wherein
a. said blocking valve further comprises a blocking valve spool moveably received in said blocking valve, said blocking valve spool being moveable between
i. a first position in which air pressure flows through said blocking valve, and
ii. a second position in which air pressure is blocked from flowing through said blocking valve; and
b. said vent valve further comprises a vent valve spool moveably received in said vent valve, said vent valve spool being moveable between
i. a first position in which air pressure flows through said vent valve out said second port into said brake cylinder, and
ii. a second position in which air pressure flows from said brake cylinder out said third port.

11. The anti-locking brake module of claim 9 or claim 10, further comprising a plurality of sensors, each sensor being operatively coupled to a respective railcar axle, wherein each of said plurality of sensors are operatively coupled to said microprocessor.

12. The anti-locking brake module of claim 11, wherein
a. said microprocessor receives a signal from one of said plurality of sensors and calculates a speed of the respective axle,
b. said microprocessor receives a signal from another one of said plurality of sensors and calculates a speed of the respective axle, and
c. said microprocessor uses one of said calculated speeds as said reference value.

13. The anti-locking brake module of claim 10, claim 11 when dependent upon claim 10 or claim 12 when dependent upon claim 10, said module further comprising:
a. a first solenoid valve operatively coupled to said microprocessor and said blocking valve, said first solenoid valve being responsive to commands from said microprocessor to move said blocking valve spool from said first position into said second position, and
b. a second solenoid valve operatively coupled to said microprocessor and said vent valve, said second solenoid valve being responsive to commands from said microprocessor to move said vent valve spool from said first position into said second position.

14. The anti-locking brake module of claim 11, wherein said plurality of sensors are encoders.

15. The anti-locking brake module of claim 11, wherein said plurality of sensors are alternators, and an output signal from each of said plurality of sensors is an AC current.

16. The anti-locking brake module of claim 15, wherein each of said plurality of alternator output signals is used by said microprocessor to
a. calculate a respective wheel axle speed, and
b. to recharge said power supply.

17. The anti-locking brake module of any of claims 9 to 16, further comprising at least one of a wireless receiver, a wireless transmitter and a wireless transceiver so that each anti-locking brake module can communicate with another anti-locking brake module.

18. An anti-locking brake system for use with a railcar comprising:
a. a brake control valve having
i. a first port coupled to a brake pipe,
ii. a second port coupled to an auxiliary reservoir,
iii. a third port coupled to an emergency reservoir, and
iv. a fourth port;
b. a first anti-locking brake module having
i. a first housing having
a first housing first port operatively coupled to said brake control valve fourth port,
a first housing second output port operatively coupled to a first brake cylinder, and
a first housing third port operatively coupled to atmosphere,
ii. a first vent valve in said first housing, said first vent valve being in fluid communication with said first housing first port, said first housing second port and said first housing third port,
iii. a first at least one sensor operatively coupled to an axle on a first railcar truck, and
iv. a first microprocessor operatively coupled to said first vent valve and said first at least one sensor,
wherein said first microprocessor is configured to
calculate one of a wheel speed of the first railcar truck axle and a deceleration rate of the first railcar truck axle based on signals received from said first at least one sensor; and
c. a second anti-locking brake module having
i. a second housing having
a second housing first port operatively coupled to said brake control valve fourth port,
a second housing second output port operatively coupled to a second brake cylinder, and
a second housing third port operatively coupled to atmosphere,
ii. a second vent valve in said second housing, said second vent valve being in fluid communication with said second housing first port, said second housing second port and said second housing third port,
iii. a second at least one sensor operatively coupled to an axle on a second railcar truck, and
iv. a second microprocessor operatively coupled to said second vent valve and said second at least one sensor;
wherein said second microprocessor is configured to calculate one of a wheel speed of the second railcar truck axle and a deceleration rate of the second railcar truck axle based on signals received from said second at least one sensor,
wherein
said first and said second microprocessors communicate with each other to compare said calculated one of a wheel speed of the first railcar truck axle and a deceleration rate of the first railcar truck axle to said calculated one of a wheel speed of the second railcar truck axle and a deceleration rate of the second railcar truck axle, and
in response to said comparison, said first and said second microprocessors activate one of said first vent valve and said second vent valve to vent brake cylinder air pressure from one of said first brake cylinder and said second brake cylinder.

19. The anti-locking brake module of claim 18, wherein said first and said second anti-locking brake modules communicate with one another over a wireless communication channel.

20. A method for preventing wheels on a railcar from slipping on a track, said method comprising:
a. a providing an anti-locking brake module having:
i. a housing defining
a first port operatively coupled to a brake pipe,
a second output port operatively coupled to a brake cylinder, and
a third port operatively coupled to atmosphere,
ii. a valve in said housing, said vent valve being in fluid communication with said first port, said second port and said third port,
iii. a sensor operatively coupled to an axle on the railcar, and
iv. a microprocessor operatively coupled to said valve and said at least one sensor;
b. calculating one of a wheel speed of the railcar axle and a deceleration rate of the railcar axle based on signals received from said sensor;
c. comparing said calculated one of said wheel speed of the railcar axle and said deceleration rate of the railcar axle to a reference value; and
d. activating said valve when said one of said wheel speed of the railcar axle and said deceleration rate is less than said reference value to vent brake cylinder air pressure from said brake cylinder out said third port to atmosphere.

21. The method for preventing wheels on a railcar from slipping on a track of claim 20, further comprising the step of charging a rechargeable power supply operatively coupled to said microprocessor with signals received from said sensor.

22. The method for preventing wheels on a railcar from slipping on a track of claim 21, wherein said sensor is an alternator.

23. The method for preventing wheels on a railcar from slipping on a track of any of claims 20 to 22, further comprising the step of communicating said one of said wheel speed of the railcar axle and said deceleration rate of the railcar axle with calculated values of other anti-locking braking modules.

24. The method for preventing wheels on a railcar from slipping on a track of claim 23, wherein said step of communicating occurs over a wireless communication channel.
